# EUROPÄISCHE PATENTSCHRIFT

(11) **EP 3 414 126 B1**
(45) Veröffentlichungstag und Bekanntmachung des Hinweises auf die Patenterteilung: **20.07.2022**
(21) Anmeldenummer: 16763870.9
(22) Anmeldetag: 14.09.2016
(51) Int. Cl.: B60N 2/427, B60N 2/16, B60N 2/22, B60N 2/42

(54) **VORRICHTUNG ZUR BEEINFLUSSUNG EINER RÜCKVERLAGERUNG EINES SITZES SOWIE SITZ**
DEVICE FOR INFLUENCING A BACKWARD MOVEMENT OF A SEAT AND SEAT
PROCÉDÉ POUR INFLUER SUR UN DÉPLACEMENT VERS L'ARRIÈRE D'UN SIÈGE ET SIÈGE CORRESPONDANT

(30) Priorität: 08.02.2016 DE 102016201843
(43) Veröffentlichungstag der Anmeldung: 19.12.2018
(73) Patentinhaber: Adient US LLC, Plymouth, MI 48170 (US)
(72) Erfinder: DEMIRCI, Oezkan, 44795 Bochum (DE); ECKENROTH, Dirk, 85117 Eitensheim (DE); SCHÜLER, Rolf, 42579 Heiligenhaus (DE)
(74) Vertreter: Liedtke & Partner Patentanwälte
(86) Internationale Anmeldenummer: PCT/EP2016/071634
(87) Internationale Veröffentlichungsnummer: WO 2017/137102

(56) Entgegenhaltungen:
- EP-A1- 2 662 238
- EP-A1- 2 955 055
- WO-A1-01/64470
- DE-A1- 19 648 974
- DE-A1-102008 047 847
- DE-A1-102013 103 694
- DE-U1-202008 017 862
- FR-A1- 2 873 962

## Beschreibung

Die Erfindung betrifft einen Sitz mit einer Vorrichtung zur Beeinflussung einer Rückverlagerung des Sitzes.

Die Erfindung betrifft weiterhin ein Fahrzeug mit einem solchen Sitz, insbesondere Fahrzeugsitz.

Bei Verkehrsunfällen, insbesondere bei Auffahrunfällen von Kraftfahrzeugen, kann es aufgrund auftretender Kräfte zu einer rückwärtigen Abwärtsbewegung, d. h. einer Bewegung in Richtung eines Fahrzeughecks und -bodens, eines Fahrzeugsitzes, insbesondere einer Sitzlehne oder eines Lehnenteils, bezogen auf eine Einbaulage des Fahrzeugsitzes in einem Fahrzeug kommen. Hierdurch besteht die Gefahr, dass der Fahrzeugsitz sich zumindest teilweise in einem ungewünscht hohen Maße verformt, wodurch unkontrollierte Bewegungen des Fahrzeugsitzes und daraus resultierende Gefährdungen auf dem Fahrzeugsitz sitzender sowie weiterer im Fahrzeug befindlicher Personen resultieren.

Aus dem Stand der Technik sind verschiedene Vorrichtungen bekannt, die eine Rückverlagerung des Fahrzeugsitzes positiv beeinflussen, indem in ausgewählten Bereichen beispielsweise gezielt zusätzlich kinematische Bewegungen ausschließlich im Crashfall ausgelöst und ausgeführt werden. Einige bekannte Vorrichtungen basieren auf unterschiedlichen, jeweils komplexen Mechanismen mit mehreren beweglichen Bauteilen, wobei typischerweise aufgrund mechanischer oder elektronischer Signale ein Bewegungsablauf dieser Bauteile ausgelöst wird. Andere bekannte Lösungen beruhen auf ausschließlich im Crashfall auftretenden Verformungen von Verbindungsteilen zwischen beispielsweise dem Lehnenteil und dem Sitzunterbau, wobei diese Lösungen jedoch zu vergleichsweise großen, ungünstigen Rückverlagerungswinkeln der Lehnenteile im Crashfall führen.

Beispielsweise offenbaren EP 2 662 238 A1, DE 196 48 974 A1, DE 10 2013 103 694 A1, WO 01/64470 A1, FR 2 873 962 A1 und EP 2 955 055 A1 bekannte Lösungen zur Beeinflussung einer Rückverlagerung eines Sitzes. Des Weiteren offenbaren DE 10 2008 047 847 A1 und DE 20 2008 017 862 U1 Lösungen zur Beeinflussung einer Rückverlagerung eines Sitzes.

Der Erfindung liegt die Aufgabe zugrunde, einen gegenüber dem Stand der Technik verbesserten Sitz mit einer Vorrichtung zur Beeinflussung einer Rückverlagerung des Sitzes sowie ein verbessertes Fahrzeug mit einem solchen Sitz, insbesondere Fahrzeugsitz, anzugeben.

Hinsichtlich des Sitzes mit einer Vorrichtung zur Beeinflussung einer Rückverlagerung des Sitzes wird die Aufgabe erfindungsgemäß durch die im Anspruch 1 angegebenen Merkmale gelöst. Hinsichtlich eines weiteren Sitzes mit einer Vorrichtung zur Beeinflussung einer Rückverlagerung des Sitzes wird die Aufgabe erfindungsgemäß durch die im Anspruch 3 angegebenen Merkmale gelöst. Hinsichtlich eines weiteren Sitzes mit einer Vorrichtung zur Beeinflussung einer Rückverlagerung des Sitzes wird die Aufgabe erfindungsgemäß durch die im Anspruch 9 angegebenen Merkmale und hinsichtlich des Fahrzeugs mit einem solchen Sitz durch die im Anspruch 12 angegebenen Merkmale gelöst.

Vorteilhafte Ausgestaltungen der Erfindung sind Gegenstand der Unteransprüche.

Der erfindungsgemäße Sitz mit einer Vorrichtung zur Beeinflussung einer Rückverlagerung des Sitzes, insbesondere eines Lehnenteils, umfasst zumindest ein in einem Gelenkbereich des Sitzteils des Sitzes, auch Sitzunterbau genannt, angeordnetes Deformationselement, wobei das Deformationselement derart ausgebildet ist, dass dieses bei einer auf das Sitzteil und/oder das Lehnenteil einwirkenden Kraft unter einem vordefinierten Drehmomentverlauf deformierbar ist, dessen Definition von Crashanforderungen des jeweiligen Fahrzeugs abhängig sein kann.

Die Vorrichtung ermöglicht in einfacher und zuverlässiger Weise die Beeinflussung und eine Steuerung der Rückverlagerung des Sitzes, insbesondere des Lehnenteils des Sitzes. Der Sitz ist beispielsweise ein Fahrzeugsitz. Somit ist es möglich, die durch eine Deformation des Deformationselements mit vordefiniertem Drehmomentverlauf bei einem Unfall bzw. Crashfall auf den Fahrzeugsitz einwirkende Kraft teilweise oder vollständig zu absorbieren und somit eine gewünschte Rückverlagerung des Fahrzeugsitzes durch entsprechende Dimensionierung und Ausführung des Deformationselements zu realisieren oder zu steuern. Hierdurch werden insbesondere während eines Crashs besonders hohe, auf die jeweilige Person einwirkende Kräfte vermieden.

Die Anordnung des Deformationselements in unmittelbarer Nähe eines Gelenkpunktes des Sitzunterbaus ermöglicht dabei eine vergleichsweise einfache Konstruktion, da die Bewegung als solche, nämlich die reine Rotationsbewegung, vom Gelenkpunkt vorgegeben werden kann und somit das Deformationselement als parallel zum Gelenk angeordnetes Bauteil prinzipiell einfach gestaltbar ist.

Weiterhin wird vermieden, dass der Fahrzeugsitz sich in ungünstig hohem Maße verformt, wodurch dadurch verursachte, unkontrollierte Bewegungen des Fahrzeugsitzes und daraus resultierende Gefährdungen auf dem Fahrzeugsitz sitzender sowie weiterer im Fahrzeug befindlicher Personen vermieden oder zumindest verringert werden.

Ferner ermöglicht das zumindest eine Deformationselement eine zusätzliche Abstützung in Fahrzeugquerrichtung, auch als Y-Richtung bezeichnet, während eines Unfalls oder Crashfalls ohne zusätzliches Abstützelement.

Mittels des Deformationselements wird somit ein eine kinetische Energie absorbierendes Element realisiert, welche wie eine standardisierte Einstellkomponente als modulare Einheit in eine Sitzstruktur integriert werden kann und somit eine Verwendung fahrzeugspezifischer Strukturteile, wie beispielsweise Beschlagunterteile oder Sitzrahmenseitenteile, zumindest teilweise ersetzt und zumindest deren Variantenanzahl reduziert.

Weiterhin weist das Deformationselement einen sehr kleinen Bauraumbedarf auf und ist in einfacher Weise in eine bestehende Sitzunterbaukonstruktionen integrierbar. Aufgrund des konstruktiven Grundkonzeptes hinsichtlich eines Betrages des Energieabbaus sowie eines dabei freigegebenen Weges durch einfache Variation von Bauteilparametern ist die Lösung an unterschiedliche Anforderungen in besonders einfacher Weise anpassbar ist.

In einer möglichen Weiterbildung der Vorrichtung weist das Sitzteil zwei Seitenteile und Schwingen auf, wobei zwischen den Schwingen eine diese verbindende Querstrebe angeordnet ist, wobei zumindest auf einer Seite zwischen an einer der Seitenteile naheliegenden Schwinge und einem Ende der Querstrebe ein Deformationselement im Gelenkbereich angeordnet ist. Dies ermöglicht, dass ein Höhenversteller des Fahrzeugsitzes bei dem Unfall bzw. Crashfall entlastet wird. Ferner ist es in einfacher Weise möglich, dass durch Anordnung des zumindest einen Deformationselements zwischen Seitenteil und Querstrebe die Deformation von Lehnenteil und Sitzteil beidseitig, d. h. insbesondere an einer einer Fahrzeugtür zugewandten Seite und einer der Fahrzeugtür abgewandten Seite, symmetrisch erfolgt.

Eine mögliche Ausgestaltung der Vorrichtung sieht vor, dass das Deformationselement aus zumindest zwei Teilen gebildet ist. Dabei können die Teile homogen aus einem Material oder aus mehreren, beispielsweise unterschiedliche Eigenschaften aufweisenden, Materialien gebildet sein. Eine Materialdehnung, -härte und/oder -festigkeit sowie ein Aufbau des jeweiligen Teils sind entsprechend zur definierten Drehmomentanforderung und zum Drehwinkel angepasst. Die separaten Teile sind mittels herkömmlicher Verbindungen, zum Beispiel stoffschlüssiger, formschlüssiger oder kraftschlüssiger Verbindung, beispielsweise mittels Schweißverbindung, Nietverbindung, Klebverbindung, miteinander fixiert.

Eine weitere mögliche Ausgestaltung der Vorrichtung sieht vor, dass eines der Teile härter als das andere Teil ist. Mit anderen Worten: Das Deformationselement ist aus zumindest einem weichen und zumindest einem harten Teil gebildet, wobei das weiche und das harte Teil miteinander verbunden oder separat ausgebildet sind. Durch eine Dimensionierung der beiden Teile und Auswahl der Härte der beiden Teile ist die Deformierbarkeit des Deformationsteils und daraus folgend der vordefinierte Drehmomentverlauf in einfacher Weise vorgebbar.

Gemäß einer Weiterbildung der Vorrichtung bildet ein Teil ein Grundteil und das andere Teil ein Stützteil, wobei das Stützteil derart mit dem Grundteil verbunden ist, dass das Stützteil relativ gegenüber dem Grundteil deformierbar oder elastisch verstellbar ist. Beispielsweise sind das Grundteil und das Stützteil über mindestens ein oder mehrere elastisch verformbare Absorptionsteile, wie Stege, miteinander verbunden, wobei durch entsprechende Dimensionierung und Ausbildung der Absorptionsteile in einfacher Weise der Drehmomentverlauf bei Rückverlagerung des Sitzes vordefinierbar ist.

Alternativ oder zusätzlich kann das Deformationselement Aussparungen aufweisen, wobei durch entsprechende Dimensionierung der Aussparungen ebenfalls in einfacher Weise der Drehmomentverlauf bei Rückverlagerung des Sitzes vordefinierbar ist.

Eine mögliche Ausgestaltung der Vorrichtung sieht vor, dass bei einer Überschreitung eines vorgegebenen Grenzwerts der auf das Sitzteil und/oder das Lehnenteil einwirkenden Kraft eine Erzeugung einer Wirkverbindung zwischen den zumindest zwei Teilen erfolgt. Beispielsweise kommt und gelangt während eines Unfalls das weiche Teil derart in Wirkverbindung mit dem harten Teil, dass der vordefinierte Drehmomentverlauf durch eine entsprechende Auslegung und Dimensionierung von beiden Teilen möglich ist.

Beispielsweise weisen die zumindest zwei Teile zur einfachen und zuverlässigen Erzeugung dieser Wirkverbindung in einem Kontaktbereich jeweils ein Profil, beispielsweise ein Zahnprofil oder Kranzprofil, auf.

Eine Weiterbildung der Vorrichtung sieht vor, dass zumindest eines der Teile als Ring ausgebildet ist. Somit kann in einfacher und zuverlässiger Weise sichergestellt werden, dass die Rückverlagerung des Sitzes, insbesondere des Lehnenteils des Sitzes, durch Drehung und/oder Verformung um den Ring oder mit dem Ring um das weitere Teil erzeugt wird. Hierdurch kann erreicht werden, dass eine relative Bewegung des Lehnenteils zum Sitzteil an einer vorgegebenen Position, d. h. im Gelenkbereich an der Position des Deformationselements, erfolgt.

In einer alternativen Ausbildung kann das Deformationselement aus einem Teil gebildet sein, dessen Material ein entsprechendes unterschiedliches Dehnungsverhalten und/oder entsprechende unterschiedliche Festigkeiten aufweist. Ein solches Deformationselement ist beispielsweise als ein Doppelring mit beide Ringe verbindenden Stegen ausgebildet. Dabei deformieren sich während eines Unfalls die Stege zwischen den beiden Ringen, so dass einer von den Ringen sich um einen bestimmten Winkel relativ zum anderen Ring dreht. Dieses ergibt einen vordefinierten Drehmomentverlauf und beeinflusst die Rückverlagerung des Sitzes, insbesondere des Lehnenteils, je nach Dimensionierung der Stege im gewünschten Maß.

Der erfindungsgemäße Sitz, insbesondere Fahrzeugsitz, umfasst ein Sitzteil, ein Lehnenteil und eine erfindungsgemäße Vorrichtung oder Ausgestaltungen und Weiterbildungen dieser. Die Vorrichtung ermöglicht aufgrund der Deformierung des Deformationselements unter einem vordefinierten Drehmomentverlauf während eines Unfalls oder im Crashfall bei einer auf das Sitzteil und/oder das Lehnenteil einwirkenden Kraft eine Beeinflussung oder Steuerung der Rückverlagerung des Sitzes, insbesondere des Lehnenteils, und somit eine Erhöhung einer Insassensicherheit.

Ausführungsbeispiele der Erfindung werden im Folgenden anhand von Zeichnungen näher erläutert.

Dabei zeigen:
- Figur 1: schematisch in perspektivischer Ansicht einen Sitz, insbesondere einen Fahrzeugsitz, umfassend ein Lehnenteil und ein Sitzteil,
- Figur 2: schematisch in perspektivischer Ansicht ein Sitzteil mit einer Vorrichtung zur Beeinflussung einer Rückverlagerung eines Sitzes, insbesondere eines Lehnenteils des Sitzes,
- Figur 3: schematisch in perspektivischer Ansicht eine vergrößerte Darstellung eines Gelenkbereichs eines Sitzteils mit einem Deformationselement,
- Figuren 4A bis 4C: schematisch verschiedene Ausführungsformen für ein Deformationselement,
- Figur 5: schematisch in perspektivischer Ansicht eine vergrößerte Darstellung eines Gelenkbereichs eines Sitzteils mit einer alternativen Ausführungsform für ein Deformationselement,
- Figur 6: schematisch in perspektivischer Ansicht eine vergrößerte Darstellung eines Gelenkbereichs eines Sitzteils mit einer alternativen Ausführungsform für ein Deformationselement,
- Figur 7 bis 14C: schematisch verschiedene Ausführungsbeispiele für ein Deformationselement
- Figur 15: schematisch in perspektivischer Ansicht eine vergrößerte Darstellung eines Gelenkbereichs eines Sitzteils mit einer weiteren Ausführungsform für ein Deformationselement, und
- Figur 16A bis 16C: schematisch das Deformationselement gemäß Figur 15 in verschiedenen Ansichten.

Einander entsprechende Teile sind in allen Figuren mit den gleichen Bezugszeichen versehen.

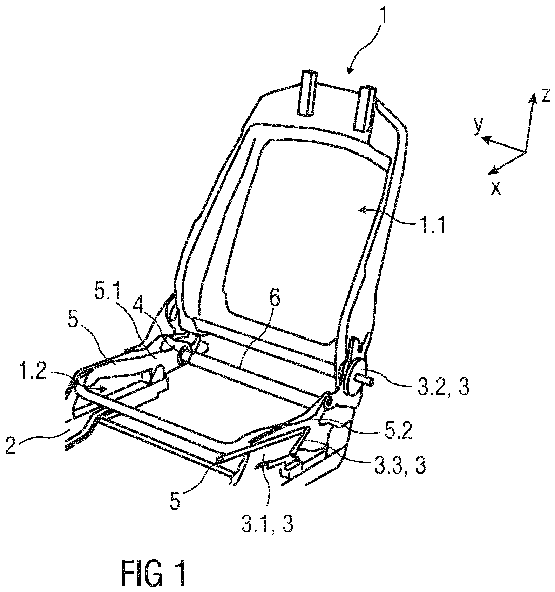

**Figur 1** zeigt schematisch in perspektivischer Ansicht einen Sitz 1, insbesondere einen Fahrzeugsitz. Der Sitz 1 umfasst ein Lehnenteil 1.1 und ein Sitzteil 1.2, auch als Sitzunterbau bezeichnet. Das Lehnenteil 1.1 und das Sitzteil 1.2 sind relativ zueinander verstellbar, insbesondere verdrehbar, und miteinander verstellbar, insbesondere in Hochrichtung Z und/oder Längsrichtung X verstellbar, insbesondere längsverstellbar oder in der Höhe neigbar.

Der Sitz 1 ist an einem Sitzschienenpaar 2 angebracht, welches aus einer mit einer Fahrzeugstruktur fest verbundenen Sitzunterschiene und einer an der Sitzunterschiene verschiebbar angeordneten Sitzoberschiene, die den Sitz 1 trägt, gebildet ist.

Hierzu umfasst der Sitz 1 mindestens eine Verstelleinheit 3, wie einen Längsversteller 3.1, einen Neigungsversteller 3.2 und/oder einen Höhenversteller 3.3.

Erfindungsgemäß umfasst der Sitz 1 eine Vorrichtung zur Beeinflussung einer Rückverlagerung bei einem Unfall. Hierzu umfasst die Vorrichtung ein Deformationselement 4, das im Bereich des unteren Sitzteils 1.2 des Sitzes 1 angeordnet ist.

Das Sitzteil 1.2 umfasst zwei Seitenteile 5, wobei die Seitenteile 5 beispielsweise jeweils eine so genannte Schwinge 5.1 umfassen. Eines der Seitenteile 5 umfasst einen Höheneinsteller 5.2. Die Seitenteile 5 sind mittels mindestens einer Querstrebe 6 miteinander verbunden. Dabei ist zumindest auf einer Seite zwischen einem der Seitenteile 5, insbesondere der Schwinge 5.1, und einem Ende der Querstrebe 6 das Deformationselement 4 angeordnet, das im Crashfall bei einer auf das Sitzteil 1.2 und/oder das Lehnenteil 1.1 einwirkenden Kraft unter einem vordefinierten Drehmomentverlauf deformierbar ist und infolgedessen eine Beeinflussung oder Steuerung der Rückverlagerung des Sitzes 1 zumindest ermöglicht.

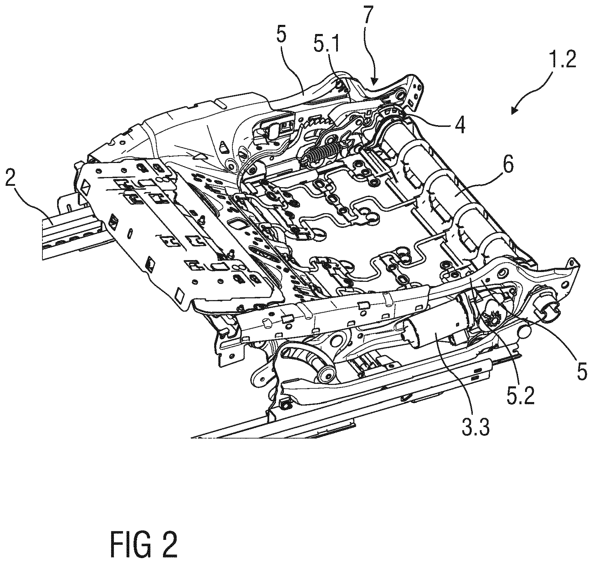

**Figur 2** zeigt schematisch in perspektivischer Ansicht das untere Sitzteil 1.2 mit einer Vorrichtung zur Reduzierung einer Rückverlagerung des Sitzes 1, insbesondere des Lehnenteils 1.1. Die Vorrichtung ist dabei im Gelenkbereich 7 für den Höhenversteller 3.3 angeordnet.

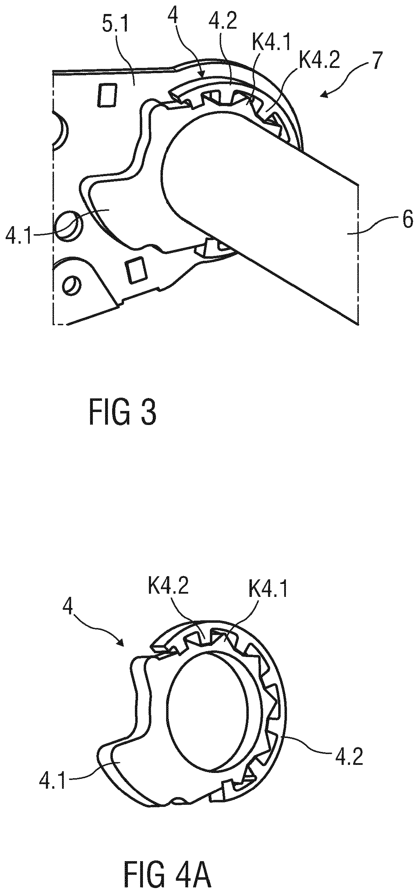

**Figur 3** zeigt schematisch in perspektivischer Ansicht eine vergrößerte Darstellung des Gelenkbereichs 7 des Sitzteils 1.2 mit einer Ausführungsform für das Deformationselement 4. In dieser Ausführungsform ist das Deformationselement 4 aus zumindest zwei Teilen 4.1, 4.2 gebildet. Dabei ist eines der Teile 4.1 aus einem harten Material und das andere Teil 4.2 aus einem weicheren Material gebildet.

Im Ausführungsbeispiel sind die Teile 4.1, 4.2 separat ausgebildet. Das harte Teil 4.1 ist an einem Ende der Querstrebe 6 angeordnet und befestigt. Das andere, insbesondere das weiche Teil 4.2 ist an dem entsprechenden Seitenteil 5 des Sitzteils 1.2 befestigt.

Alternativ kann das Deformationselement 4 einstückig als Zweikomponentenelement, insbesondere Spritzgussteil, aus zwei verschiedenen Materialien gebildet sein. Alternativ können die weichen und harten Teile 4.1, 4.2 miteinander verbunden sein.

Das Deformationselement 4 ist derart ausgebildet, dass während eines Unfalls das weiche Teil 4.2 derart in Wirkverbindung mit dem harten Teil 4.1 kommt und gelangt, dass ein vordefinierter Drehmomentverlauf durch eine entsprechende Auslegung und Dimensionierung von beiden Teilen 4.1, 4.2 möglich ist.

Hierzu weisen die beiden Teile 4.1, 4.2 randseitig im Kontaktbereich Kranzprofile K4.1, K4.2 auf. Beispielsweise weist das harte Teil 4.1 ein zackenförmiges Kranzprofil K4.1 auf. Das weiche Teil 4.2 weist ein stegförmiges Kranzprofil K4.2 auf, wobei die weichen Stege an den harten Zacken bei einem Unfall in Wirkverbindung gelangen und sich deformieren und eine Rückverlagerung des Sitzes 1, insbesondere des Lehnenteils 1.1, mit einem vordefinierten Drehmomentverlauf erfolgt.

Durch eine entsprechende Auslegung und Ausgestaltung der Teile 4.1, 4.2 ist die Rückverlagerung des Lehnenteils 1.1 vorgebbar, insbesondere verringerbar oder vergrößerbar oder begrenzbar. Zusätzlich kann der Höhenversteller 3.3 bei einem Unfall entlastet werden. Die Teile 4.1, 4.2 sind einfach herstellbar. Auch können die Teile 4.1, 4.2 einfach verbunden werden.

Alternativ kann das Deformationselement 4 bei anderer Ausgestaltung auch an einer anderen geeigneten Stelle am Sitz 1 angeordnet sein.

Bei entsprechender Ausgestaltung des Deformationselements 4 kann ein breites Drehmomentspektrum für die Rückverlagerung des Lehnenteils 1.1 vorgegeben werden. Beispielsweise kann durch andere Durchmesser, Dicken, Höhen, Breiten und/oder Materialfestigkeiten der Teile 4.1, 4.2, andere Dicken und/oder Breiten der Kranzprofile K4.1, 4.2 der Teile 4.1, 4.2 ein Drehmomentverlauf für die Rückverlagerung des Lehnenteils 1.1 vordefiniert werden. Auch kann durch die Schräge der Zacken, Stege der Kranzprofile 4.1, 4.2 der Drehmomentverlauf vordefiniert werden.

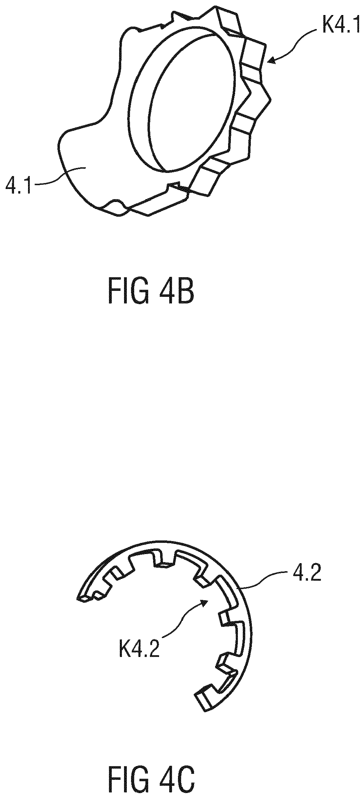

Die **Figuren 4A bis 4C** zeigen schematisch verschiedene Ausführungsformen für das zweiteilige Deformationselement 4. Figur 4A zeigt die Teile 4.1, 4.2 im Wirkzustand, in welchen die beiden Teile 4.1, 4.2 ineinander greifen. Figur 4B zeigt eine mögliche Ausführungsform für das harte Teil 4.1 und Figur 4C zeigt eine mögliche Ausführungsform für das weiche Teil 4.2.

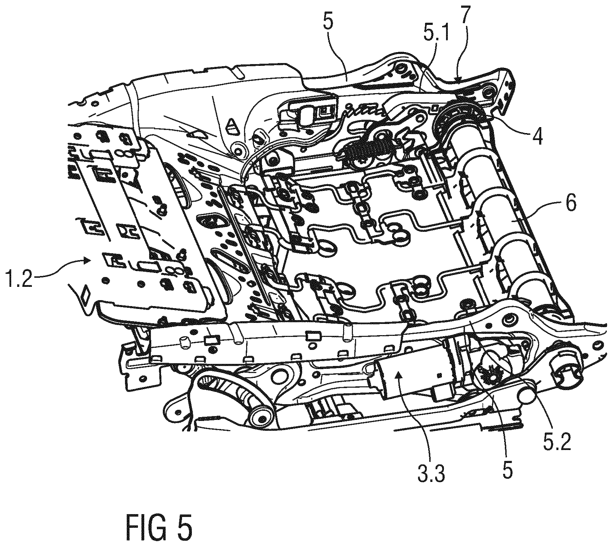

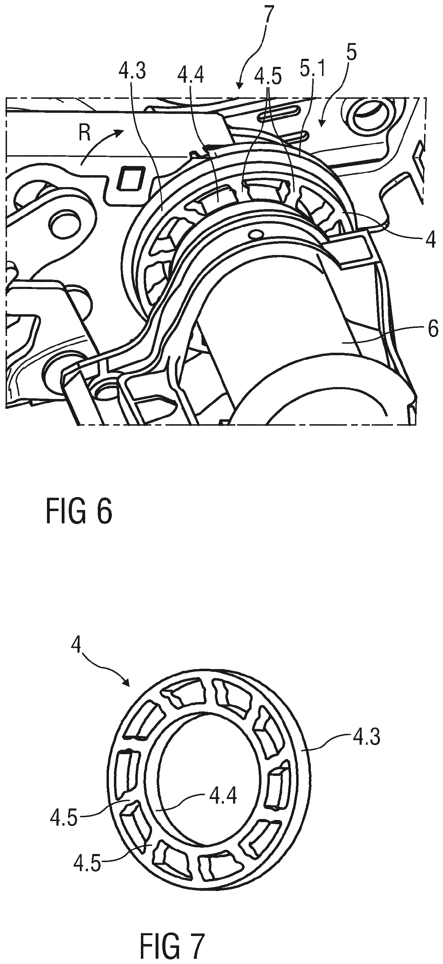

Die **Figuren 5** **und** **6** zeigen schematisch in perspektivischer Ansicht eine vergrößerte Darstellung des Gelenkbereichs 7 des unteren Sitzteils 1.2 mit einer alternativen Ausführungsform für ein Deformationselement 4. Das Deformationselement 4 ist einstückig ausgebildet. Beispielsweise weist das einstückige Deformationselement 4 zwei radial voneinander beabstandete Teilbereiche 4.3, 4.4, im Folgenden auch als Ringe 4.3, 4.4 bezeichnet, auf. Die Ringe 4.3, 4.4 sind mittels weiteren Teilbereichen 4.5, im Folgenden auch als Stege 4.5 bezeichnet, miteinander verbunden. Die Stege 4.5 verlaufen schräg zwischen den beiden Ringen 4.3, 4.4.

Der innere Ring 4.4 ist an der Querstrebe 6 befestigt. Der äußere Ring 4.3 ist am Seitenteil 5 befestigt. Bei einem Unfall bleiben die inneren und äußeren Ringe 4.3, 4.4 stabil und fest am Seitenteil 5 bzw. an der Querstrebe 6 angeordnet. Durch eine Rückverlagerung in Drehrichtung R infolge des Unfalls verdreht sich der äußere Ring 4.3 und infolgedessen deformieren sich die Stege 4.5. Durch entsprechende Auslegung der Stege 4.5 und der Ringe 4.3, 4.4 ist ein definierter Drehmomentverlauf bei der Rückverlagerung in Drehrichtung R des Lehnenteils 1.1 vorgebbar und einstellbar. Durch eine entsprechende Schrägstellung der Stege 4.5 können eine gewünschte Drehung und ein Deformationsweg erzielt und eingestellt werden.

Die **Figuren 6 bis 8** zeigen das Deformationselement 4 mit dem Doppelring (Ringe 4.3, 4.4) und den schrägen Stegen 4.5 vor einer Deformation und somit vor einem Unfall.

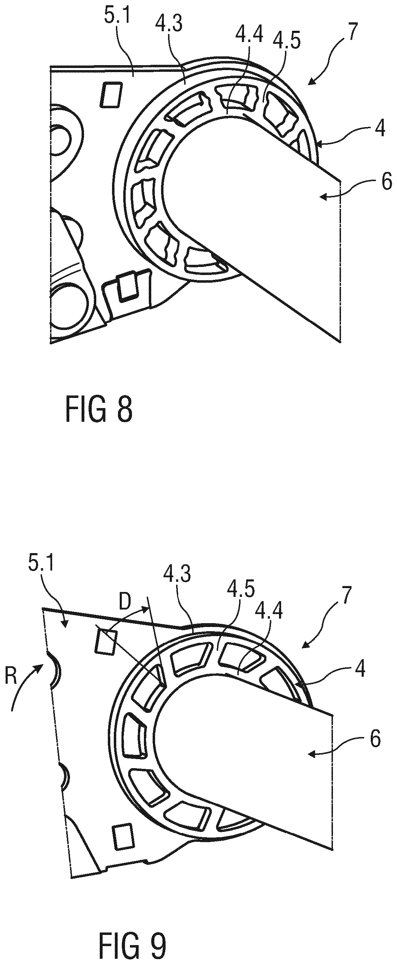

**Figur** 9 zeigt das Deformationselement 4 nach einem Unfall mit deformierten Stegen 4.5 mit einem Deformationswinkel D. Die Stege 4.5 sind in Drehrichtung R infolge der Lehnenrückverlagerung so mit einem Deformationswinkel D deformiert, dass einer von beiden Ringen 4.3, 4.4, insbesondere der äußere Ring 4.3 eine gewünschte Drehung aufweist und somit einen definierten Drehmomentverlauf erzielt.

Dabei können die beiden Ringe 4.3, 4.4 aus hartem Material und die Stege 4.5 aus einem weicheren Material ausgebildet sein. Je nach Vorgabe für den Drehmomentverlauf können die Ringe 4.3, 4.4 auch aus unterschiedlich harten Materialien gebildet sein.

Je nach Material, Materialdehnung oder Materialfestigkeit sowie durch andere Durchmesser, Dicken, Breiten der Ringe 4.3, 4.4, andere Dicken, Breiten, Schrägen und/oder Form der Stege 4.5 kann der Drehmomentverlauf für die Rückverlagerung eingestellt und vorgegeben werden.

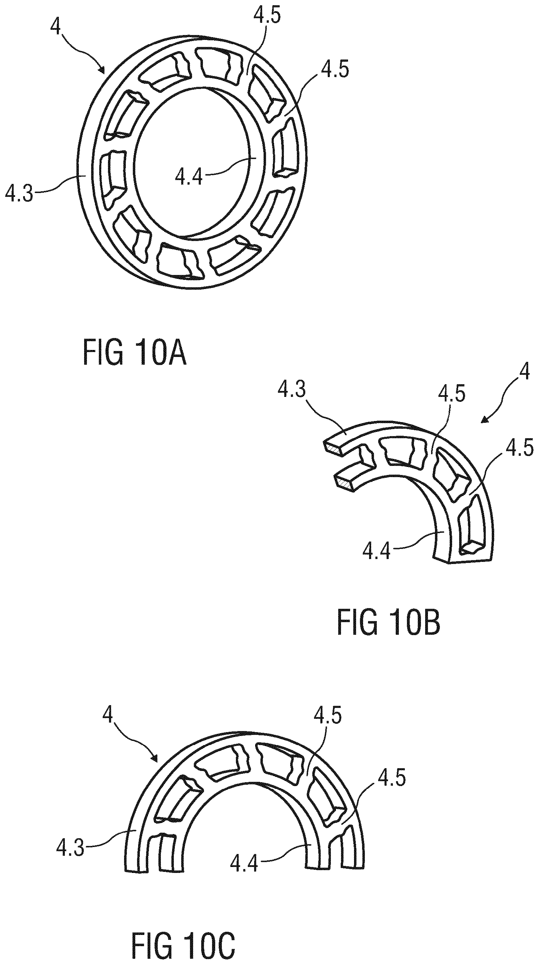

Die **Figuren 10A bis 10C** zeigen verschiedene Ausführungsformen für das Deformationselement 4 mit Doppelringdesign in Kreisform (Figur 10A), als Kreissegment (Figur 10B) oder als Halbkreis (Figur 10C).

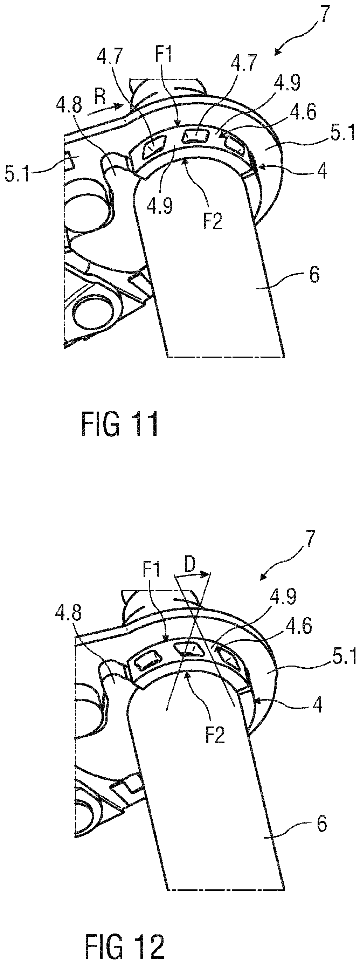

Die **Figuren 11 bis 14C** zeigen ein weiteres Ausführungsbeispiel für ein Deformationselement 4. Das Deformationselement 4 umfasst als Stützteil einen breiten Ring 4.6 mit Aussparungen 4.7, der zumindest bei einem Unfall in Eingriff und Wirkverbindung mit einem Anschlagelement 4.8 als Grundteil steht.

Dabei ist eine axiale äußere Ringfläche F1 des breiten Ringes 4.6, die am Seitenteil 5 anliegt, an diesem befestigt. Die gegenüberliegende und axiale innere Ringfläche F2 des breiten Ringes 4.6, die an der Querstrebe 6 anliegt, ist mit dieser verbunden. Die Aussparungen 4.7 sind derart in den Ring 4.6 eingebracht, dass schräge Stege 4.9 gebildet sind. Bei einem Unfall bleiben die axialen Ringflächen F1, F2 stabil und fest, so dass die Stege 4.9 deformieren und die äußere Ringfläche F1 in Drehrichtung R eine gewünschte Drehung aufweist und somit einen definierten Drehmomentverlauf erzielt.

Bei einem Unfall bleiben die Ringflächen F1, F2 stabil und fest am Seitenteil 5 bzw. an der Querstrebe 6 befestigt. Die äußere Ringfläche F1 dreht in Drehrichtung R infolge der Lehnenrückverlagerung, wodurch sich die Stege 4.9 mit einem Deformationswinkel D deformieren, so dass einer von beiden Ringflächen F1, F2, insbesondere die äußere Ringfläche F1 eine gewünschte Drehung aufweist und somit einen definierten Drehmomentverlauf erzielt.

Dabei können die beiden Ringflächen F1, F2 aus hartem Material und die Stege 4.9 aus einem weicheren Material gebildet sein. Je nach Vorgabe für den Drehmomentverlauf können die Ringflächen F1, F2 auch aus unterschiedlich harten Materialien gebildet sein.

Je nach Material, Materialdehnung oder Materialfestigkeit sowie durch andere Durchmesser, Dicken, Breiten der RingflächenF1, F2, andere Dicken, Breiten, Schrägen und/oder Form der Stege 4.9 kann der Drehmomentverlauf für die Rückverlagerung eingestellt und vorgegeben werden.

Figur 11 zeigt das Deformationselement 4 vor einem Unfall mit nicht deformierten Stegen 4.9.

Figur 12 zeigt das Deformationselement 4 nach einem Unfall mit deformierten Stegen 4.9 mit dem Deformationswinkel D.

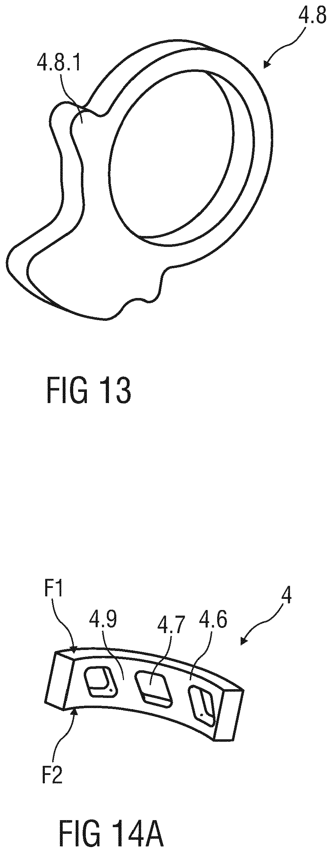

Figur 13 zeigt das Anschlagelement 4.8 mit dem Mitnehmer 4.8.1 für die Rückverlagerung.

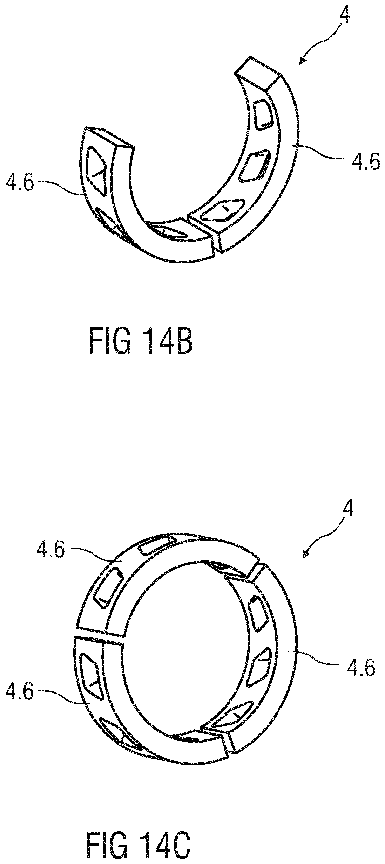

Die Figuren 14A bis 14C zeigen verschiedene Ausführungsformen für das Deformationselement 4 mit Doppelringflächendesign mit einem Kreissegment (Figur 14A), zwei einen Halbkreis bildenden Kreissegmenten (Figur 14B) oder drei einen Kreis bildenden Kreissegmenten (Figur 14C).

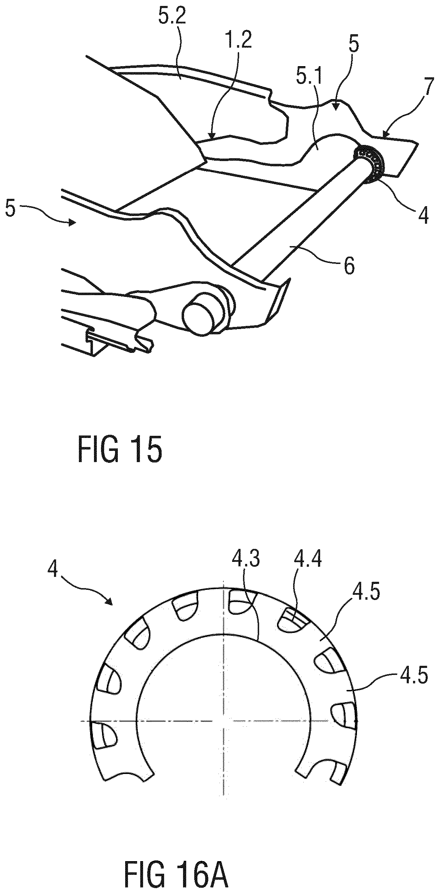

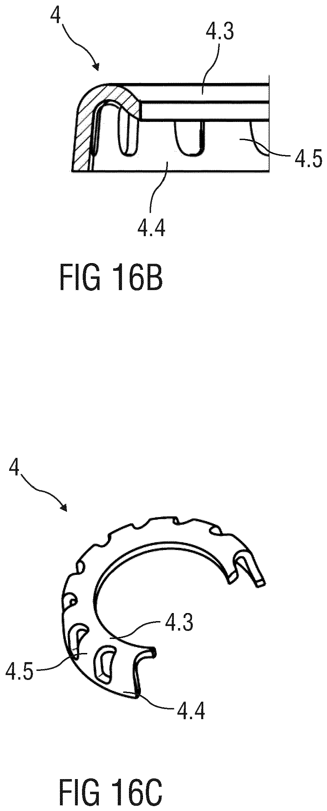

**Figur 15** zeigt schematisch in perspektivischer Ansicht eine vergrößerte Darstellung des Gelenkbereichs 7 des unteren Sitzteils 1.2 mit einer weiteren alternativen Ausführungsform für ein Deformationselement 4. Figur 16A bis 16C zeigen schematisch das Deformationselement 4 gemäß Figur 15 in verschiedenen Ansichten.

Das Deformationselement 4 ist einstückig ausgebildet. Beispielsweise ist das einstückige Deformationselement 4 topfförmig ausgebildet, wobei in einem Topfboden ein kreisförmiges Segment ausgespart ist, so dass das Deformationselement 4 ringförmig ausgebildet ist. Insbesondere ist das Deformationselement 4 ein topfförmiges, aus Blech umgeformtes Bauteil welches zumindest abschnittsweise als Kreissegment ausgebildet ist. Beispielsweise ist das Deformationselement 4 aus einem Stahl, einem so genannten HSD-Stahl (HSD = High Strength and Ducity), einem so genannten TWIP-Stahl (TWIP = Twinning Induced Plasticity) oder so genannten TRIP-Stahl (TRIP = Transformation Induced Plasticity) gebildet.

Dabei weist das Deformationselement 4 zwei voneinander beabstandete Ringe 4.3, 4.4 auf. Ein erster Ring 4.3 ist dabei gemäß der Topfform zu einem zweiten Ring 4.4 abgewinkelt angeordnet, wobei das Deformationselement 4 einen im Wesentlichen J-förmigen oder L-förmigen Querschnitt aufweist.

Die Ringe 4.3, 4.4 sind mittels Stegen 4.5 miteinander verbunden. Die Stege 4.5 verlaufen zwischen den beiden Ringen 4.3, 4.4 in der Art, dass diese einen nahezu parabelförmigen Übergang zu zumindest einem der Ringe 4.3, 4.4 aufweisen. Hierdurch wird ein besonders guter Spannungsverlauf bei einer Belastung des Deformationselements 4 erzielt.

Der im Querschnitt einen langen Schenkel des "J" oder "L" bildende Ring 4.4 ist an der Schwinge 5.1 des Seitenteils 5 befestigt. Der einen kurzen Schenkel bildende Ring 4.3 ist an der Querstrebe 6 befestigt. Bei einem Unfall bleiben die Ringe 4.3, 4.4 stabil und fest am Seitenteil 5 bzw. an der Querstrebe 6 angeordnet. Durch eine Rückverlagerung in Drehrichtung R infolge des Unfalls verdreht sich der Ring 4.3 und infolgedessen deformieren sich die Stege 4.5. Durch entsprechende Auslegung der Stege 4.5 und der Ringe 4.3, 4.4 ist ein definierter Drehmomentverlauf bei der Rückverlagerung in Drehrichtung R des Lehnenteils 1.1 vorgebbar und einstellbar. Durch eine entsprechende Schrägstellung der Stege 4.5 bzw. Anpassung des parabelförmigen Verlaufs können eine gewünschte Drehung und ein Deformationsweg erzielt und eingestellt werden.

Das dargestellte Ausführungsbeispiel nutzt aufgrund einer Bauteilgestaltung, die zu einer zusammengesetzten Materialbelastung aus Zug, Biegung und Torsion führt, eine plastische Verformungsfähigkeit des eingesetzten Materials besonders geschickt aus und stellt somit ein sehr wirkungsvolles, das eingesetzte Material effektiv ausnutzendes, Deformationselement 4 dar.

### Bezugszeichenliste

- 1: Sitz
- 1.1: Lehnenteil
- 1.2: Sitzteil
- 2: Sitzschienenpaar
- 3: Verstelleinheit
- 3.1: Längsversteller
- 3.2: Neigungsversteller
- 3.3: Höhenversteller
- 4: Deformationselement
- 4.1: Teil
- 4.2: Teil
- 4.3: (äußerer) Ring, Teilbereich
- 4.4: (innerer) Ring, Teilbereich
- 4.5: Steg, Teilbereich
- 4.6: Breiter Ring
- 4.7: Aussparung
- 4.8: Anschlagelement
- 4.9: Steg
- 5: Seitenteil
- 5.1: Schwinge
- 5.2: Höheneinsteller
- 6: Querstrebe
- 7: Gelenkbereich

- D: Deformationswinkel
- F1, F2: Ringflächen
- K4.1, K4.2: Kranzprofile
- R: Drehrichtung
- X: Längsrichtung
- Z: Hochrichtung

## Patentansprüche

1. Sitz (1) mit einer Vorrichtung zur Beeinflussung einer Rückverlagerung des Sitzes (1), wobei der Sitz (1) ein Lehnenteil (1.1) und ein Sitzteil (1.2) umfasst, mit
- zumindest einem zwischen einem Seitenteil (5) des Sitzteils (1.2) und einem Ende einer Querstrebe (6) in einem Gelenkbereich (7) des Sitzteils (1.2) angeordneten Deformationselement (4),
- wobei das Deformationselement (4) derart ausgebildet ist, dass dieses bei einer auf das Sitzteil (1.2) und/oder das Lehnenteil (1.1) einwirkenden Kraft unter einem vordefinierten Drehmomentverlauf deformierbar ist,
- wobei das Deformationselement (4) einstückig aus einem Teil mit mehreren Teilbereichen (4.3 bis 4.5) gebildet ist und das einstückige Deformationselement (4) zwei radial voneinander beabstandete Teilbereiche (4.3, 4.4) umfasst, die über weitere Teilbereiche (4.5) miteinander verbunden sind, wobei ein innerer Teilbereich (4.4) an der Querstrebe (6) und ein äußerer Teilbereich (4.3) am Seitenteil (5) befestigt sind, und
- die Teilbereiche (4.3 bis 4.5) unterschiedliches Dehnungsverhalten und/oder unterschiedliche Festigkeiten aufweisen.

2. Sitz (1) mit einer Vorrichtung nach Anspruch 1,
**dadurch gekennzeichnet, dass**
- das Sitzteil (1.2) zwei Seitenteile (5) und Schwingen (5.1) aufweist und
- zwischen den Schwingen (5.1) eine diese verbindende Querstrebe (6) angeordnet ist.

3. Sitz (1) mit einer Vorrichtung zur Beeinflussung einer Rückverlagerung des Sitzes (1), wobei der Sitz (1) ein Lehnenteil (1.1) und ein Sitzteil (1.2) umfasst, mit
- zumindest einem zwischen einem Seitenteil (5) des Sitzteils (1.2) und einem Ende einer Querstrebe (6) in einem Gelenkbereich (7) des Sitzteils (1.2) des Sitzes (1) angeordneten Deformationselement (4),
- wobei das Deformationselement (4) derart ausgebildet ist, dass dieses bei einer auf das Sitzteil (1.2) und/oder das Lehnenteil (1.1) einwirkenden Kraft unter einem vordefinierten Drehmomentverlauf deformierbar ist, **dadurch gekennzeichnet, dass** das Deformationselement (4) aus zumindest zwei Teilen (4.1, 4.2) gebildet ist, wobei eines der Teile (4.1, 4.2) härter als das andere Teil (4.2, 4.1) ist, wobei die beiden Teile (4.1, 4.2) randseitig im Kontaktbereich Kranzprofile (K4.1, K4.2) aufweisen, und das harte Teil (4.1) ein zackenförmiges Kranzprofil (K4.1) und das weiche Teil (4.2) ein stegförmiges Kranzprofil (K4.2) aufweisen, wobei das harte Teil (4.1) an der Querstrebe (6) und das weiche Teil (4.2) am Seitenteil (5) befestigt sind.

4. Sitz (1) mit einer Vorrichtung nach Anspruch 3,
**dadurch gekennzeichnet, dass**
- ein Teil ein Grundteil und das andere Teil ein Stützteil bildet,
- wobei das Stützteil derart mit dem Grundteil verbunden ist, dass das Stützteil relativ gegenüber dem Grundteil deformierbar oder elastisch verstellbar ist.

5. Sitz (1) mit einer Vorrichtung nach einem der Ansprüche 3 oder 4,
**dadurch gekennzeichnet, dass** das bei einer Überschreitung eines vorgegebenen Grenzwerts der auf das Sitzteil (1.2) und/oder das Lehnenteil (1.1) einwirkenden Kraft eine Erzeugung einer Wirkverbindung zwischen den zumindest zwei Teilen (4.1, 4.2) erfolgt.

6. Sitz (1) mit einer Vorrichtung nach Anspruch 5,
**dadurch gekennzeichnet, dass** die zumindest zwei Teile (4.1, 4.2) in einem Kontaktbereich jeweils ein Kranzprofil (K4.1, K4.2) zur Erzeugung der Wirkverbindung aufweisen.

7. Sitz (1) mit einer Vorrichtung nach einem der Ansprüche 3 bis 6,
**dadurch gekennzeichnet, dass** zumindest eines der Teile als Ring (4.3, 4.4, 4.6) ausgebildet ist.

8. Sitz (1) mit einer Vorrichtung nach Anspruch 1 oder 2, wobei das Deformationselement (4) als ein Doppelring mit zwei Ringen (4.3, 4.4) ausgebildet ist, die über Stege (4.5) miteinander verbunden sind.

9. Sitz (1) mit einer Vorrichtung zur Beeinflussung einer Rückverlagerung des Sitzes (1), wobei der Sitz (1) ein Lehnenteil (1.1) und ein Sitzteil (1.2) umfasst, mit
- zumindest einem zwischen einem Seitenteil (5) des Sitzteils (1.2) und einem Ende einer Querstrebe (6) in einem Gelenkbereich (7) des Sitzteils (1.2) angeordneten Deformationselement (4),
- wobei das Deformationselement (4) derart ausgebildet ist, dass dieses bei einer auf das Sitzteil (1.2) und/oder das Lehnenteil (1.1) einwirkenden Kraft unter einem vordefinierten Drehmomentverlauf deformierbar ist,
- wobei das Deformationselement (4) als Stützteil einen breiten Ring (4.6) mit Aussparungen (4.7) umfasst, der zumindest bei einem Unfall in Eingriff und Wirkverbindung mit einem als Grundteil ausgebildeten Anschlagelement (4.8) steht, wobei eine axiale äußere Ringfläche (F1) des breiten Ringes (4.6) am Seitenteil (5) anliegt und an diesem befestigt ist und eine gegenüberliegende und axiale innere Ringfläche (F2) des breiten Ringes (4.6) an der Querstrebe (6) anliegt und mit dieser verbunden ist.

10. Sitz (1) mit einer Vorrichtung nach Anspruch 9, wobei die
Aussparungen (4.7) derart in den Ring (4.6) eingebracht sind, dass schräge Stege (4.9) gebildet sind.

11. Sitz (1) mit einer Vorrichtung nach Anspruch 10, wobei die beiden Ringflächen (F1, F2) aus hartem Material und die Stege (4.9) aus einem weicheren Material gebildet sind.

12. Fahrzeug mit einem Sitz (1), insbesondere Fahrzeugsitz, nach einem der vorhergehenden Ansprüche.

## Claims

1. Seat (1) with a device for influencing a backward movement of the seat (1), wherein the seat (1) comprises a backrest part (1.1) and a seating part (1.2), comprising
- at least one deformation element (4) arranged in a hinged area (7) of the seating part (1.2) between a side part (5) of the seating part (1.2) and one end of a transverse strut (6),
- wherein the deformation element (4) is designed such that it is deformable due to a force acting on the seating part (1.2) and/or the backrest part (1.1) at a predefined torque curve,
- wherein the deformation element (4) is formed in one piece from one part with a plurality of partial regions (4.3 to 4.5) and the one-piece deformation element (4) comprises two partial regions (4.3, 4.4) which are spaced apart radially from one another and are connected together by means of further partial regions (4.5), an internal partial region (4.4) being fastened to the transverse strut (6) and an external partial region (4.3) to the side part (5), and
- the partial regions (4.3 to 4.5) have a different expansion behaviour and/or different strengths.

2. Seat (1) with a device according to Claim 1, **characterized in that**
- the seating part (1.2) comprises two side parts (5) and pivoting arms (5.1) and
- between the pivoting arms (5.1) a transverse strut (6) connecting said pivoting arms is arranged.

3. Seat (1) with a device for influencing a backward movement of the seat (1), wherein the seat (1) comprises a backrest part (1.1) and a seating part (1.2), comprising
- at least one deformation element (4) arranged in a hinged area (7) of the seating part (1.2) of the seat (1) between a side part (5) of the seating part (1.2) and one end of a transverse strut (6),
- wherein the deformation element (4) is designed such that it is deformable due to a force acting on the seating part (1.2) and/or the backrest part (1.1) at a predefined torque curve,
**characterized in that** the deformation element (4) is formed from at least two parts (4.1, 4.2), wherein one of the parts (4.1, 4.2) is harder than the other part (4.2, 4.1), wherein the two parts (4.1, 4.2) comprise rim profiles (K4.1, K4.2) on the edge in the contact region, and the hard part (4.1) has a toothed rim profile (K4.1) and the flexible part (4.2) has a web-shaped rim profile (K4.2), the hard part (4.1) being fastened to the transverse strut (6) and the soft part (4.2) to the side part (5).

4. Seat (1) with a device according to Claim 3, **characterized in that**
- one part forms a base part and the other part forms a support part,
- wherein the support part is connected to the base part such that the support part is deformable or adjustable in a resilient manner relative to the base part.

5. Seat (1) with a device according to either of Claims 3 and 4,
**characterized in that** when a predetermined threshold value of the force acting on the seating part (1.2) and/or the backrest part (1.1) is exceeded, an operative connection is produced between the at least two parts (4.1, 4.2).

6. Seat (1) with a device according to Claim 5, **characterized in that** the at least two parts (4.1, 4.2) have in each case a rim profile (K4.1, K4.2) for producing the operative connection in a contact region.

7. Seat (1) with a device according to one of Claims 3 to 6,
**characterized in that** at least one of the parts is configured as a ring (4.3, 4.4, 4.6).

8. Seat (1) with a device according to Claim 1 or 2, wherein the deformation element (4) is configured as a double ring with two rings (4.3, 4.4) which are connected together via webs (4.5).

9. Seat (1) with a device for influencing a backward movement of the seat (1), wherein the seat (1) comprises a backrest part (1.1) and a seating part (1.2), comprising
- at least one deformation element (4) arranged in a hinged area (7) of the seating part (1.2) between a side part (5) of the seating part (1.2) and one end of a transverse strut (6),
- wherein the deformation element (4) is designed such that it is deformable due to a force acting on the seating part (1.2) and/or the backrest part (1.1) at a predefined torque curve,
- wherein the deformation element (4) comprises as a support part a wide ring (4.6) with recesses (4.7), which at least in the event of an accident is in engagement and is operatively connected to a stop element (4.8) configured as a base part, wherein an axial external ring surface (F1) of the wide ring (4.6) bears against the side part (5) and is fastened thereto, and an opposing and axial internal ring surface (F2) of the wide ring (4.6) bears against the transverse strut (6) and is connected thereto.

10. Seat (1) with a device according to Claim 9, wherein the recesses (4.7) are incorporated in the ring (4.6) such that oblique webs (4.9) are formed.

11. Seat (1) with a device according to Claim 10, wherein the two ring surfaces (F1, F2) are formed from hard material and the webs (4.9) from a more flexible material.

12. Vehicle with a seat (1), in particular vehicle seat, according to one of the preceding claims.

## Revendications

1. Siège (1) avec un dispositif pour influencer un déplacement vers l'arrière du siège (1), le siège (1) comprenant une partie de dossier (1.1) et une partie de siège (1.2), avec
- au moins un élément de déformation (4) agencé entre une partie latérale (5) de la partie de siège (1.2) et une extrémité d'une traverse (6) dans une zone d'articulation (7) de la partie de siège (1.2),
- l'élément de déformation (4) étant configuré de telle sorte que celui-ci peut être déformé selon une courbe de couple prédéfinie sous l'effet d'une force agissant sur la partie de siège (1.2) et/ou la partie de dossier (1.1),
- l'élément de déformation (4) étant formé d'un seul tenant en une partie avec plusieurs zones partielles (4.3 à 4.5) et l'élément de déformation (4) d'un seul tenant comprenant deux zones partielles (4.3, 4.4) espacées radialement l'une de l'autre, qui sont reliées entre elles par le biais d'autres zones partielles (4.5), une zone partielle intérieure (4.4) étant fixée à la traverse (6) et une zone partielle extérieure (4.3) étant fixée à la partie latérale (5), et
- les zones partielles (4.3 à 4.5) présentant un comportement d'allongement différent et/ou des résistances différentes.

2. Siège (1) avec un dispositif selon la revendication 1, **caractérisé en ce que**
- la partie de siège (1.2) présente deux parties latérales (5) et des bras oscillants (5.1) et
- entre les bras oscillants (5.1) est agencée une traverse (6) qui les relie.

3. Siège (1) avec un dispositif pour influencer un déplacement vers l'arrière du siège (1), le siège (1) comprenant une partie de dossier (1.1) et une partie de siège (1.2), avec
- au moins un élément de déformation (4) agencé entre une partie latérale (5) de la partie de siège (1.2) et une extrémité d'une traverse (6) dans une zone d'articulation (7) de la partie de siège (1.2) du siège (1),
- l'élément de déformation (4) étant configuré de telle sorte que celui-ci peut être déformé selon une courbe de couple prédéfinie sous l'effet d'une force agissant sur la partie de siège (1.2) et/ou la partie de dossier (1.1),
**caractérisé en ce que** l'élément de déformation (4) est formé d'au moins deux parties (4.1, 4.2), l'une des parties (4.1, 4.2) étant plus dure que l'autre partie (4.2, 4.1), les deux parties (4.1, 4.2) présentant des profils de couronne (K4.1, K4.2) du côté du bord dans la zone de contact, et la partie dure (4.1) présentant un profil de couronne en forme de pointes (K4.1) et la partie souple (4.2) un profil de couronne en forme d'entretoises (K4.2), la partie dure (4.1) étant fixée à la traverse (6) et la partie souple (4.2) étant fixé à la partie latérale (5).

4. Siège (1) avec un dispositif selon la revendication 3, **caractérisé en ce que**
- une partie forme une partie de base et l'autre partie une partie de support,
- la partie de support étant reliée à la partie de base de telle sorte que la partie de support peut être déformée ou peut être réglée élastiquement par rapport à la partie de base.

5. Siège (1) avec un dispositif selon l'une quelconque des revendications 3 ou 4, **caractérisé en ce qu'**en cas de dépassement d'une valeur limite prédéterminée de la force agissant sur la partie de siège (1.2) et/ou la partie de dossier (1.1), un établissement d'une liaison active entre les au moins deux parties (4.1, 4.2) a lieu.

6. Siège (1) avec un dispositif selon la revendication 5, **caractérisé en ce que** les au moins deux parties (4.1, 4.2) présentent chacune dans une zone de contact un profil de couronne (K4.1, K4.2) pour l'établissement de la liaison active.

7. Siège (1) avec un dispositif selon l'une quelconque des revendications 3 à 6, **caractérisé en ce qu'**au moins l'une des parties est configurée sous forme d'anneau (4.3, 4.4, 4.6).

8. Siège (1) avec un dispositif selon la revendication 1 ou 2, dans lequel l'élément de déformation (4) est configuré sous la forme d'un double anneau avec deux anneaux (4.3, 4.4) qui sont reliés entre eux par des entretoises (4.5).

9. Siège (1) avec un dispositif pour influencer un déplacement vers l'arrière du siège (1), le siège (1) comprenant une partie de dossier (1.1) et une partie de siège (1.2), avec
- au moins un élément de déformation (4) agencé entre une partie latérale (5) de la partie de siège (1.2) et une extrémité d'une traverse (6) dans une zone d'articulation (7) de la partie de siège (1.2),
- l'élément de déformation (4) étant configuré de telle sorte que celui-ci peut être déformé selon une courbe de couple prédéfinie sous l'effet d'une force agissant sur la partie de siège (1.2) et/ou la partie de dossier (1.1),
- l'élément de déformation (4) comprenant, en tant que partie de support, un anneau large (4.6) avec des évidements (4.7) qui, au moins en cas d'accident, est en prise et en liaison active avec un élément de butée (4.8) configuré en tant que partie de base, une surface annulaire extérieure axiale (F1) de l'anneau large (4.6) s'appliquant sur la partie latérale (5) et étant fixée à celle-ci, et une surface annulaire intérieure axiale et opposée (F2) de l'anneau large (4.6) s'appliquant sur la traverse (6) et étant reliée à celle-ci.

10. Siège (1) avec un dispositif selon la revendication 9, dans lequel les évidements (4.7) sont pratiqués dans l'anneau (4.6) de telle sorte que des entretoises obliques (4.9) sont formées.

11. Siège (1) avec un dispositif selon la revendication 10, dans lequel les deux surfaces annulaires (F1, F2) sont formées d'un matériau dur et les entretoises (4.9) sont formées d'un matériau plus souple.

12. Véhicule avec un siège (1), notamment un siège de véhicule, selon l'une quelconque des revendications précédentes.
